# EUROPÄISCHE PATENTSCHRIFT

(11) **EP 1 601 945 B1**
(45) Veröffentlichungstag und Bekanntmachung des Hinweises auf die Patenterteilung: **17.01.2007**
(21) Anmeldenummer: 03770907.8
(22) Anmeldetag: 07.10.2003
(51) Int. Cl.: G01M 3/04, F02M 65/00

(54) **VERFAHREN, VORRICHTUNG UND COMPUTERPROGRAMM ZUM MESSEN DER LECKAGE VON EINSPRITZSYSTEMEN, INSBESONDERE FÜR BRENNKRAFTMASCHINEN VON KRAFTFAHRZEUGEN**
METHOD, DEVICE, AND COMPUTER PROGRAM FOR MEASURING THE LEAKAGE OF INJECTION SYSTEMS, ESPECIALLY FOR INTERNAL COMBUSTION ENGINES OF MOTOR VEHICLES
PROCEDE, DISPOSITIF ET PROGRAMME INFORMATIQUE DESTINES A LA MESURE DE LA FUITE DE SYSTEMES D'INJECTION, NOTAMMENT DANS DES MOTEURS A COMBUSTION INTERNE DE VEHICULES

(30) Priorität: 05.03.2003 DE 10309440
(43) Veröffentlichungstag der Anmeldung: 07.12.2005
(73) Patentinhaber: ROBERT BOSCH GMBH, 70442 Stuttgart (DE)
(72) Erfinder: WINKLER, Jochen, 73730 Esslingen (DE); WEHNER, Markus-Ulrich, 76135 Karlsruhe (DE); SOMMER, Thorsten, 70563 Stuttgart (DE)
(86) Internationale Anmeldenummer: PCT/DE2003/003322
(87) Internationale Veröffentlichungsnummer: WO 2004/079321

(56) Entgegenhaltungen:
- WO-A-02/054038
- DE-A- 4 321 709
- DE-A- 19 809 926
- US-A- 5 834 631

## Beschreibung

### Stand der Technik

Kraftstoffeinspritzsysteme für Brennkraftmaschinen und deren Komponenten, wie beispielsweise Common-Rail Injektoren, müssen im Betrieb dicht sein. Außerdem müssen sie auch bei abgestellter Brennkraftmaschine dicht sein, um zu verhindern, dass Kraftstoff aus den Einspritzsystemen beziehungsweise den Injektoren, austritt und möglicherweise zu einer Gefährdung von Personen, der Brennkraftmaschine oder der Umwelt führt. Die dazu erforderliche Dichtheitsprüfung vor der Auslieferung der Einspritzsysteme an den Kunden erfolgt bislang durch eine Sichtprüfung, nachdem das Einspritzsystem eine gewisse Zeit mit einem Prüfdruck beaufschlagt wurde. Diese Sichtprüfung ist ein subjektives, nicht quantifizierbares Messverfahren, welches teilweise zu personenabhängigen Ergebnissen führt. Außerdem kann das Ergebnis der Dichtheitsprüfung nicht quantifiziert werden.

Aus der US 5,834, 631 ist ein Verfahren zur Messung von Undichtigkeiten bekannt, bei dem die von einer Leckagemenge verursachte Verformung einer dünnen Metallmembran erfasst und ausgewertet wird. Da die Metallmembran eine relativ große Fläche einnimmt und eine Dicke von nur 0,05 mm aufweist, ist das Verfahren nur bei geringen Drücken einsetzbar.

Der Erfindung liegt die Aufgabe zugrunde, ein automatisierbares Verfahren bereitzustellen, welches objektive Messergebnisse produziert, das automatisierbar ist und welches anhand vorgebbarer Grenzwerte zu einem eindeutigen Ergebnis führt, ob ein geprüfter Injektor oder ein Einspritzventil dicht ist oder nicht.

Diese Aufgabe wird erfindungsgemäß durch Verfahren nach den nebengeordneten Ansprüchen 1 und 2 gelöst.

Diese Verfahren sind in ihrem Ablauf relativ einfach und deshalb gut automatisierbar. Außerdem wird durch den Vergleich der Messignale bei verschiedenen Drücken oder mit einem Referenzwert die eventuell auftretende Leckage quantifizierbar und es kann im Zusammenhang mit einem vorgebbaren Grenzwert automatisch die Entscheidung getroffen werden, ob das geprüfte Einspritzsystem als dicht anzusehen ist oder nicht. Durch die Automatisierung der Dichtheitsprüfung werden Kosten eingespart und die Qualität der ausgelieferten Produkte nimmt zu, da Fehler bei der Dichtheitsprüfung ausgeschlossen werden können.

Das erfindungsgemäße Verfahren kann weiter vereinfacht werden, wenn das Prüffluid von dem Einspritzsystem beziehungsweise dem Injektor oder der Einspritzdüse in die Messkammer eingebracht wird, da diese Einspritzsysteme und -komponenten ohnehin dafür vorgesehen sind, dosierte Kraftstoffmengen in den Brennraum einer Brennkraftmaschine einzuspritzen. Deshalb sind die zum Einbringen eines Prüffluids in die Messkammer erforderlichen Funktionalitäten ohnehin vorhanden.

Die Auswertung der automatisierten Dichtheitsprüfung kann weiter verbessert werden, wenn eine Zeitreihe der von der Erfassungseinrichtung gelieferten Messsignale durch Vergleich mit einer Zeitreihe von Referenzwerten ausgewertet wird.

Des Weiteren kann die Aussagekraft der nach dem erfindungsgemäßen Verfahren vorgenommenen Dichtheitsprüfung weiter gesteigert werden, indem der im Einspritzsystem herrschende Prüfdruck p_{prüf} variiert wird und für jeden Druck mindestens ein von der Erfassungseinrichtung geliefertes Messsignal ausgewertet wird. Selbstverständlich kann diese Ausgestaltung des Verfahrens auch im Zusammenhang mit der Erfassung einer Zeitreihe von Messwerten eingesetzt werden.

Aus der Auswertung von verschiedenen Zeitreihen von Messwerten, die bei verschiedenen Prüfdrücken aufgenommen wurden, kann möglicherweise schon die Ursache für eine eventuell auftretende Undichtheit des Einspritzsystems erkannt werden, so dass die nachfolgende Fehlerbehebung erleichtert wird.

Die erfindungsgemäße Aufgabe wird auch durch eine Vorrichtung zur Messung der Leckage von Einspritzsystemen, insbesondere von Injektoren und Einspritzdüsen für Brennkraftmaschinen, insbesondere in der Fertigungsprüfung, mit einer Messkammer, in welche ein Prüffluid von dem Einspritzsystem eingespritzt werden kann, mit einem Kolben, der mindestens bereichsweise die Messkammer begrenzt, wobei der Kolben gegen das Prüffluid vorgespannt ist, und mit einer Erfassungseinrichtung, die eine Bewegung des Kolbens erfasst und ein entsprechendes Messsignal oder eine Zeitreihe von Messsignalen liefert, dadurch gelöst werden, dass sie zur Durchführung eines der mit den vorhergehenden Ansprüchen beanspruchten Verfahren eingesetzt wird.

Aus der DE 100 64 511 C2 ist ein sogenannter EMI (Einspritzmengenindikator) bekannt. Dieser EMI besteht aus einem Gehäuse, in dem ein Kolben geführt ist. Der Innenraum des Gehäuses und der Kolben begrenzen eine Messkammer. Diese weist eine Öffnung auf, an die ein Einspritzsystem, beispielsweise ein Injektor mit einer Einspritzdüse, druckdicht einsetzbar ist. Spritzt das Einspritzsystem Kraftstoff in die Messkammer ein, wird ein sich in der Messkammer befindliches Fluid verdrängt. Hierdurch bewegt sich der Kolben, was von einem Wegsensor erfasst wird. Aus dem Weg des Kolbens kann auf die Volumenänderung der Messkammer bzw. des dort gehaltenen Fluids und hierdurch auf die eingespritzte Kraftstoffmenge geschlossen werden.

Zur Messung der Bewegung des Kolbens wird bei dem bekannten Einspritzmengenindikator mit einer Anordnung aus einem Messstößel und einem induktiven Wegmesssystem gemessen. Der Messstößel ist als Taster ausgeführt oder fest mit dem Kolben verbunden. Bei einer Bewegung des Kolbens wird also auch der Messstößel in Bewegung versetzt, und letztlich wird die Bewegung des Messstößels erfasst und ein entsprechendes Signal an eine Auswerteeinheit weitergeleitet.

Diese Einspritzmengenindikatoren werden eingesetzt, um die unter bestimmten Bedingungen von einem Einspritzsystem, insbesondere einem Injektor oder einer Einspritzdüse, eingespritzte Kraftstoffmenge hochpräzise zu messen. Da die Einspritzmengenindikatoren alle erforderlichen Merkmale aufweisen, um das erfindungsgemäße Verfahren zur Prüfung der Dichtheit von Einspritzsystemen, insbesondere Injektoren oder Einspritzdüsen, zu prüfen, empfiehlt es sich, diese Einspritzmengenindikatoren auch zur Durchführung des erfindungsgemäßen Verfahrens heranzuziehen. Dadurch ergeben sich zusätzliche erhebliche wirtschaftliche Vorteile: Zunächst muss für die Durchführung des erfindungsgemäßen Verfahrens keine neue Vorrichtung hergestellt werden und außerdem können die Einspritzmengenprüfung und die Dichtheitsprüfung eines Einspritzsystems in einer Aufspannung und nacheinander in der gleichen Vorrichtung, nämlich dem Einspritzmengenindikator, durchgeführt werden. Dadurch entfallen Rüst- und Transportzeiten und die Handhabung des Prüfungsablaufs eines Einspritzsystems wird erheblich vereinfacht. Alles in allem führt dies zu erheblichen wirtschaftlichen Vorteilen durch den Übergang von der Sichtprüfung auf das erfindungsgemäße automatisierbare Verfahren zur Prüfung der Dichtheit von Einspritzsystemen.

Der zur Durchführung des erfindungsgemäßen Verfahrens eingesetzte Einspritzmengenindikator kann eine Dämpfungseinrichtung umfassen, welche die Bewegung des Kolbens wenigstens zeitweise dämpft. Dabei ist es vorteilhaft, wenn der Dämpfungsgrad der Dämpfungseinrichtung zeitlich einstellbar ist, insbesondere wenn der Dämpfungsgrad durch eine Steuer- und Regeleinrichtung ansteuerbar ist, so dass auch die Steuerung des Dämpfungsgrades vollautomatisiert und somit ohne zusätzliche Kosten erfolgen kann.

Um vergleichbare Prüfergebnisse zu erzielen, empfiehlt es sich, den Kolben durch eine Schraubenfeder gegen das Prüffluid vorzuspannen. Alternativ oder zusätzlich kann auch der Kolben mit einem Gasdruck beaufschlagt werden. Bei bekannter Federrate und bekanntem Gasdruck kann der Druck in der Messkammer ohne Weiteres berechnet werden und aus der gemessenen Leckagemenge eine Aussage über die Dichtigkeit beziehungsweise Undichtigkeit des geprüften Einspritzsystems getroffen werden.

Die Erfindung betrifft schließlich noch ein Computerprogramm, welches zur Durchführung des obigen Verfahrens geeignet ist, wenn es auf einem Computer ausgeführt wird. Dabei ist besonders bevorzugt, wenn das Computerprogramm auf einem Speicher, insbesondere auf einem Flash-Memory, abgespeichert ist.

### Zeichnung

Nachfolgend wird ein Ausführungsbeispiel der Erfindung unter Bezugnahme auf die beiliegende Zeichnung im Detail erläutert. In der Zeichnung zeigen:
- Figur 1: einen Schnitt durch eine Vorrichtung zum Messen der Einspritzmenge von Einspritzsystemen für Brennkraftmaschinen mit einer Dämpfungseinrichtung;
- Figur 2: ein Diagramm, in dem das durch das erfindungsgemäße Verfahren gewonnene Messsignal und ein Referenzwert über die Zeit aufgetragen sind.

### Beschreibung des Ausführungsbeispiels

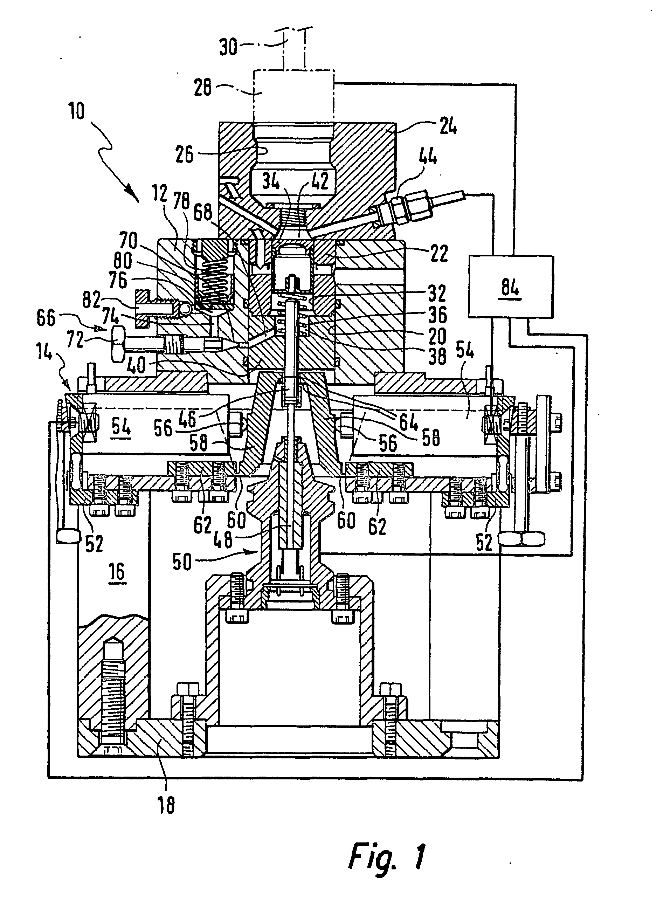

In Figur 1 trägt eine Vorrichtung zum Messen der Einspritzmenge von Einspritzsystemen insgesamt das Bezugszeichen 10. Sie umfasst einen zentral angeordneten Körper 12, der auf einer Dämpfungsvorrichtung 14 sitzt, welche wiederum auf einer Hülse 16 gehalten ist. Diese steht auf einer Bodenplatte 18, die am Boden verankert ist. In den zentralen Körper 12 ist eine im Wesentlichen zentrische Bohrung 20 eingebracht. In deren oberen Abschnitt ist ein zylindrischer Einsatz 22 eingesetzt, der über O-Ringdichtungen (ohne Bezugszeichen) gegenüber dem zentralen Körper 12 abgedichtet ist. Auf den Einsatz 22 ist ein Kopf 24 druckdicht aufgesetzt, in den eine Stufenbohrung 26 eingebracht ist, die in dem in Figur 1 dargestellten zusammengebauten Zustand koaxial zur Bohrung 20 im zentralen Körper 12 verläuft.

In die Stufenbohrung 26 ist von oben her ein Adapter 28 eingesetzt und gegenüber der Stufenbohrung 26 abgedichtet. In den Adapter 28 wird ein Einspritzsystem, vorliegend ein Injektor 30 mit seiner Einspritzdüse (ohne Bezugszeichen) eingesetzt. Der Injektor 30 ist wiederum mit einer Hochdruck-Prüffluidversorgung (nicht dargestellt) verbunden. Der Injektor 30 ist in Figur 1 nur schematisch gestrichelt dargestellt. In den unteren Bereich der Stufenbohrung 26 im Kopf 24 kann ein Spritzdämpfer (nicht dargestellt) eingesetzt werden.

Im zylindrischen Einsatz 22 ist ebenfalls eine Bohrung 32 vorhanden, die in der in Figur 1 dargestellten Einbaulage koaxial zur Bohrung 20 im zentralen Körper 12 bzw. zur Stufenbohrung 26 im Kopf 24 ist. In der Bohrung 32 ist ein Kolben 34 gleitend geführt. Der Kolben 34 wird von einer Schraubenfeder 36 nach oben gedrückt. Diese stützt sich unten auf einem Absatz (ohne Bezugszeichen) einer Stufenbohrung 38 in einem Zwischenstück 40 ab. Das Zwischenstück 40 ist im unteren Bereich der Bohrung 20 im zentralen Körper 12, also unterhalb des zylindrischen Einsatzes 22, aufgenommen.

Zwischen der Oberseite des Kolbens 34 (bei der in Figur 1 dargestellten oberen Endstellung des Kolbens 34) und dem Kopf 24 bildet ein Abschnitt der Stufenbohrung 26 im Kopf 24 und ein Abschnitt der Bohrung 32 eine Messkammer 42. Diese ist mit einem Prüffluid (nicht dargestellt), typischerweise einem Prüföl, welches den Eigenschaften des von dem Injektor 30 im realen Betrieb einzuspritzenden Kraftstoffes möglichst nahe kommt, gefüllt. Die Temperatur des Prüföls, welches sich in der Messkammer 42 befindet, wird von einem Temperaturfühler 44 erfasst, der durch eine Bohrung von schräg außen durch den Kopf 24 bis zur Messkammer 42 eingeführt ist.

Der Kolben 34 ist als kreiszylindrischer Hohlkörper ausgeführt. An der unteren Stirnwand des Kolbens 34 ist ein Stößel 46 befestigt, der rohrförmig aufgebaut ist und sich durch die Bohrung 38 im Zwischenstück 40 nach unten über das Zwischenstück 40 hinaus erstreckt. Der Stößel 46 ist über eine O-Ringdichtung (ohne Bezugszeichen) gegenüber dem unteren Bereich der Stufenbohrung 38 im Zwischenstück 40 abgedichtet. Am unteren Ende des Stößels 46 ist eine stabförmige Verlängerung 48 angebracht, die sich koaxial zum Stößel 46 nach unten zu einem induktiven Wegaufnehmer 50 erstreckt. Alternativ zu dem genannten induktiven Wegaufnehmer können auch andere Wegaufnehmer eingesetzt werden.

Die unterhalb des zentralen Körpers 12 angeordnete Dämpfungseinrichtung 14 ist folgendermaßen aufgebaut: In einem Rahmen 52 sind zu beiden Seiten des Stößels 46 bzw. seiner Verlängerung 48, einander diametral gegenüberliegend, Piezoelemente 54 gehalten. Die Piezoelemente 54 arbeiten mit einem abgerundeten Stellglied 56 auf einen Betätigungsarm 58. Die beiden Betätigungsarme 58 sind über eine dünne Materialbrücke 60 an ihrem in Figur 1 unteren Ende jeweils mit einem Basisteil 62 verbunden, welches wiederum am Rahmen 52 fest verschraubt ist. Die Materialbrücke 60 bildet also ein Scharnier, welches eine senkrecht zur Zeichenebene von Figur 1 liegende Scharnierachse für den entsprechenden Betätigungsarm 58 vorgibt. Die Materialbrücke 60 ist jedoch so ausreichend steif, dass der jeweilige Betätigungsarm 58 ganz leicht gegen das Stellglied 56 des jeweiligen Piezoelements 54 vorgespannt ist.

An den in Figur 1 oberen Enden weisen die Betätigungsarme 58 jeweils einen zum Stößel 46 gerichteten Abschnitt auf, dessen zum Stößel 46 gerichtete Endfläche 64 in dem in Figur 1 dargestellten Ruhezustand in einem geringen Abstand von der Oberfläche des Stößels 46 angeordnet ist. Die Endfläche 64 des Betätigungsarms 58 ist jeweils als Reibfläche ausgebildet.

Neben der gerade beschriebenen Dämpfungseinrichtung 14 weist die Vorrichtung 10 noch eine zusätzliche Dämpfungsvorrichtung 66 auf: Bei ihr handelt es sich um eine Strömungsbremse, die folgendermaßen aufgebaut ist: Der Raum unterhalb der unteren Stirnfläche des Kolbens 34 in der Bohrung 20 des zylindrischen Einsatzes 22, der obere Bereich der Stufenbohrung 38 im Zwischenstück 40 und ein von diesem Bereich schräg nach außen führender Stichkanal, sind mit Prüföl gefüllt und bilden einen ersten Strömungsraum 68. Der Stichkanal im Zwischenstück 40 führt zu einer im zentralen Körper 12 angeordneten Drossel bzw. Blende 70, die über eine Verstellschraube 72 einstellbar ist. Von der Blende 70 führt ein Kanal 74 nach oben zu einem zweiten Strömungsraum 76, der nach oben hin durch die Stirnfläche eines durch eine Schraubenfeder 78 vorgespannten Kolbens 80 begrenzt ist. Über ein Ventil 82 kann der Strömungsraum 76 entleert werden.

Die Vorrichtung 10 umfasst ferner eine Steuer- und Regeleinrichtung 84, welche eingangsseitig mit dem Temperaturfühler 44 und dem induktiven Wegaufnehmer 50 und ausgangsseitig mit einem nicht dargestellten Magnetventil und den beiden Piezoelementen 54 verbunden ist.

Die in Figur 1 dargestellte Vorrichtung 10 zur Messung der Einspritzmenge eines Einspritzsystems 30 kann erfindungsgemäß auch zur Ermittlung der Leckage des Einspritzsystems 30 in folgender Weise eingesetzt werden:

Auf Veranlassung durch die Steuer- und Regeleinrichtung 84 wird über die Hochdruck-Prüffluidversorgung dem Injektor 30 und seiner Einspritzdüse Prüffluid (nicht dargestellt) zugeführt und in die ebenfalls mit Prüffluid gefüllte Messkammer 42 eingespritzt. Durch die Einspritzung von Prüffluid in die Messkammer 42 erhöht sich das Prüffluidvolumen in der Messkammer 42. Das zusätzlich in die Messkammer 42 gelangende Volumen beschleunigt den Kolben 34 nach unten gegen die Kraft der Schraubenfeder 36 und den Gasdruck unterhalb des Kolbens 34.

Hierdurch bewegt sich auch der Stößel 46 und die an diesem angebrachte Verlängerung 48, was zu einem dem von der Verlängerung 48 zurückgelegten Weg entsprechenden Messsignal des induktiven Wegaufnehmers 50 führt. Aus diesem Messsignal wird in der Steuer- und Regeleinrichtung. 84 in einer in dieser vorhandenen nicht dargestellten Verarbeitungseinheit unter Berücksichtigung der spezifischen geometrischen Verhältnisse das eingespritzte Prüffluidvolumen berechnet.

Damit ist die vom Einspritzsystem 30 in die Messkammer 42 eingespritzte Kraftstoffmenge bekannt und es beginnt das erfindungsgemäße Verfahren zur Prüfung der Dichtheit des Einspritzsystems 30.

Zu diesem Zweck wird das Einspritzsystem 30 geschlossen und ein Gegendruck, nachfolgend als Einspritzdruck p_{Prüf} bezeichnet, im Einspritzsystem aufrechterhalten.

Wenn das Einspritzsystem 30 hundertprozentig dicht abschließt, kann kein Prüffluid aus der Messkammer 42 in das Einspritzsystem 30 gelangen. Gleiches gilt für das im Einspritzsystem 30 unter dem Prüfdruck p_{Prüf} stehende Fluid in umgekehrter Richtung.

Aufgrund der inneren Leckage des Einspritzmengenindikators, insbesondere aufgrund der Leckage zwischen Kolben 34 und der Bohrung 32, in welcher der Kolben 34 geführt wird, sowie einer möglichen Leckage am Ventil 82, wird sich der Kolben 34, angetrieben durch die Anpresskraft der auf den Kolben 34 wirkenden Schraubenfeder sowie eines eventuell vorhandenen Gasdrucks, der auf die Unterseite des Kolbens 34 wirkt, in seine Ausgangsposition zurückbewegen. Das dabei messbare Weg-Zeit-Gesetz der Bewegung des Kolbens 34 ist ein Maß für die innere Leckage des Einspritzmengenindikators.

In der Figur 2a ist auf der linken Seite das Weg-Zeit-Gesetz eines Einspritzmengenindikators in Diagrammform dargestellt. Dabei wird vorausgesetzt, dass das Einspritzsystem 30 dicht ist. Dieses Weg-Zeit-Gesetz, welches in der Figur 2a auch mit s_{ref} bezeichnet wird, ist eine gerade Linie mit negativer Steigung.

Wenn nun, wie in der Figur 2a im rechten Teil dargestellt, ein Einspritzsystem 30 an dem Einspritzmengenindikator 10 angeschlossen ist, das nicht dicht schließt, wird wegen des im Einspritzsystem 30 herrschenden Prüfdrucks p_{pruf} Prüffluid aus dem Einspritzsystem 30 durch die undichte Stelle in die Messkammer 42 gepresst. Der Grund hierfür liegt in der Tatsache begründet, dass der Prüfdruck p_{Prüf} größer ist als der Druck in der Messkammer 42. Aufgrund des in die Messkammer 42 einströmenden Prüffluids ändert sich das Weg-Zeit-Gesetz der Bewegung des Kolbens 34. Ausgehend von einem gleichen Anfangswert zur Zeit t = 0 bewegt sich der Kolben 34 langsamer in seine Ausgangsposition zurück, was durch die geringere negative Steigung der gemessenen Werte sₘ gegenüber den Referenzwerten s_{ref}, die ja für einen Einspritzmengenindikator mit angeschlossenem dichten Einspritzsystem 30 stehen, ausdrückt.

Im rechten Teil der Figur 2a sind die Referenzwerte s_{ref} zur Veranschaulichung des zuvor Gesagten gestrichelt dargestellt.

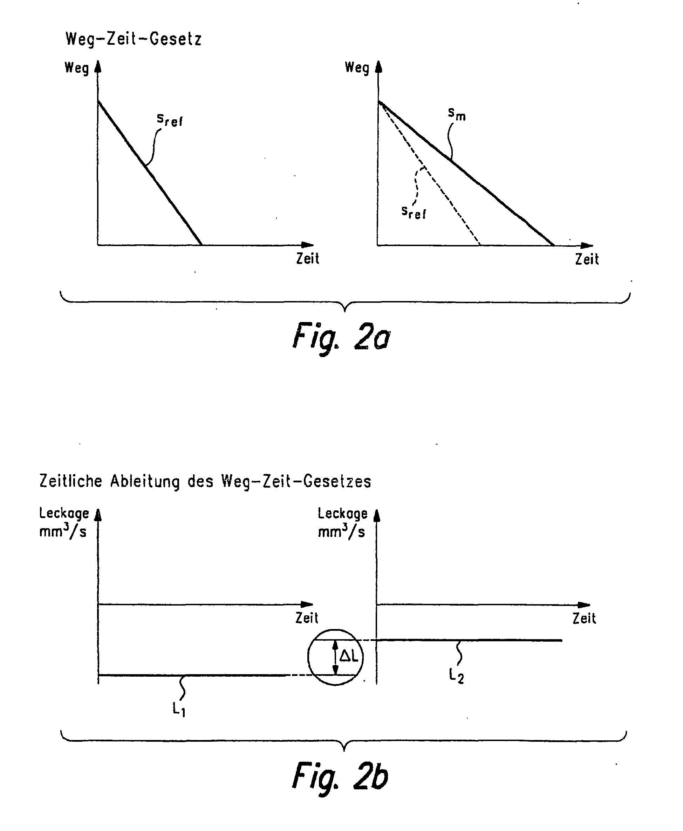

In der Figur 2b ist die zeitliche Ableitung der in Figur 2a dargestellten Größen in Diagrammform dargestellt. Die zeitliche Ableitung des Weg-Zeit-Gesetzes ergibt die Leckage L in mm³/s. Die Leckage L hat im Fall eines Einspritzsystems 30, ohne Undichtigkeiten (linker Teil der Figur 2b) einen Wert L₁. Im Fall eines Einspritzsystems 30, welches nicht dicht abschließt, ist die Leckage L₂ aufgrund des nachströmenden Prüffluids kleiner als im erstgenannten Fall. Die Leckage L₂ ist vom Betrag her kleiner als die Leckage L₁. Die Differenz ΔL, der Leckage L₁ und der Leckage L₂ ist ein Maß für die Undichtheit des Ventils. Selbstverständlich hängt die Undichtheit ΔL auch von dem Prüfdruck p_{Prüf}, welcher im Einspritzsystem 30 in geschlossenem Zustand herrscht, ab. Durch die Ermittlung der Leckage L₂ mit variierenden Prüfdrücken p_{Prüf} können weitere Erkenntnisse über das Maß der Undichtheit des Einspritzsystems 30 gewonnen werden. In manchen Fällen können aus der Änderung der Leckage ΔL in Abhängigkeit eines geänderten Prüfdrucks p_{Prüf} weitere Hinweise über die Art und Ursache der Leckage gewonnen werden.

Bei einer Variante des anhand der Figur 2 beschriebenen Verfahrens kann die Dichtigkeit des Einspritzsystems 30 auch dadurch ermittelt werden, dass der Druck im Einspritzsystem 30 oder in der Messkammer 42 variiert wird. Durch die Auswertung der dabei gewonnenen Messsignale sₘ, i kann die Dichtheit des Einspritzsystems 30 durch den Vergleich der bei verschiedenen Drücken gewonnenen Messignale s_{m, i} ebenfalls ermittelt werden.

## Patentansprüche

1. Verfahren zum Messen der Leckage von Einspritzsystemen (30), insbesondere für Brennkraftmaschinen von Kraftfahrzeugen und insbesondere in der Fertigungsprüfung, **gekennzeichnet durch** folgende Verfahrensschritte:
- Anschließen des Einspritzsystems (30) an eine Messkammer (42),
- Einbringen eines Prüffluids in eine Messkammer (42),
- Variieren des Drucks (p_{prüf}) im Einspritzsystem (30),
- Erfassen des zeitlichen Verlaufs der Bewegung (sₘ(t)) eines die Messkammer (42) wenigstens bereichsweise begrenzenden Kolbens (34) von einer Erfassungseinrichtung (50) und
- Auswerten einer Zeitreihe der von der Erfassungseinrichtung (50) gelieferten Messsignale (s_{m,i} (t)) für jeden Druck (p_{prüf,i}).

2. Verfahren zum Messen der Leckage von Einspritzsystemen (30), insbesondere für Brennkraftmaschinen von Kraftfahrzeugen und insbesondere in der Fertigungsprüfung, **gekennzeichnet durch** folgende Verfahrensschritte:
- Anschließen des Einspritzsystems (30) an eine Messkammer (42),
- Einbringen eines Prüffluids in eine Messkammer (42),
- anschließendes Erfassen des zeitlichen Verlaufs der Bewegung (sₘ(t)) eines die Messkammer (42) wenigstens bereichsweise begrenzenden Kolbens (34) von einer Erfassungseinrichtung (50) und
- Auswerten mindestens einer Zeitreihe der von der Erfassungseinrichtung (50) gelieferten Messsignale (sₘ (t)) durch Vergleich mit mindestens einer Referenzzeitreihe (s_{ref} (t)).

3. Verfahren nach Anspruch 1 oder 2, **dadurch gekennzeichnet, dass** das Prüffluid von dem Einspritzsystem (30) in die Messkammer (42) eingebracht wird.

4. Verfahren nach einem der Ansprüche 2 oder 3, **dadurch gekennzeichnet, dass** der Druck (p_{Prüf}) im Einspritzsystem (30) variiert wird und für jeden Druck (p_{Prüf,i}) mindestens ein von der Erfassungseinrichtung (50) geliefertes Messsignal (sₘᵢ) wird.

5. Verfahren nach einem der vorhergehenden Ansprüche, **dadurch gekennzeichnet, dass** der Druck (p_{Prüf}) im Einspritzsystem (30) variiert wird und für jeden Druck (p_{Prüf,i}) eine Zeitreihe der von der Erfassungseinrichtung (50) gelieferten Messsignale (sₘᵢ (t)) ausgewertet wird.

6. Verfahren nach einem der Ansprüche 1 sowie 3 bis 5, **dadurch gekennzeichnet, dass** die Auswertung des oder der Messsignale (sₘᵢ) durch Vergleich mit einen oder mehreren Referenzwerten (s_{ref}) erfolgt.

7. Vorrichtung (10) zur Messung der Leckage von Einspritzsystemen (30), insbesondere für Brennkraftmaschinen von Kraftfahrzeugen und insbesondere in der Fertigungsprüfung, mit einer Messkammer (42), in welche ein Prüffluid von dem Einspritzsystem (30) eingespritzt werden kann, mit einem Kolben (34), der mindestens bereichsweise die Messkammer (42) begrenzt, wobei der Kolben (34) gegen das Prüffluid vorgespannt ist, und mit einer Erfassungseinrichtung (50), die eine Bewegung des Kolbens erfasst und ein entsprechendes Messsignal (sm) oder eine Zeitreihe (sₘ (t)) von Messsignalen liefert, **dadurch gekennzeichnet, dass** sie zur Durchführung eines Verfahrens geeignet ist, welches folgende Verfahrensschritte umfasst:
- Anschließen des Einspritzsystems (30) an eine Messkammer (42),
- Einbringen eines Prüffluids in eine Messkammer (42),
- Variieren des Drucks (p_{Prüf}) im Einspritzsystem (30),
- Erfassen des zeitlichen Verlaufs der Bewegung (sₘ(t)) eines die Messkammer (42) wenigstens bereichsweise begrenzenden Kolbens (34) von einer Erfassungseinrichtung (50) und
- Auswerten einer Zeitreihe der von der Erfassungseinrichtung (50) gelieferten Messsignale (s_{m,i} (t)) für jeden Druck (p_{Prüf,i}).

8. Vorrichtung (10) zur Messung der Leckage von Einspritzsystemen (30), insbesondere für Brennkraftmaschinen von Kraftfahrzeugen und insbesondere in der Fertigungsprüfung, mit einer Messkammer (42), in welche ein Prüffluid von dem Einspritzsystem (30) eingespritzt werden kann, mit einem Kolben (34), der mindestens bereichsweise die Messkammer (42) begrenzt, wobei der Kolben (34) gegen das Prüffluid vorgespannt ist, und mit einer Erfassungseinrichtung (50), die eine Bewegung des Kolbens erfasst und ein entsprechendes Messsignal (sm) oder eine Zeitreihe (sₘ (t)) von Messsignalen liefert, **dadurch gekennzeichnet, dass** sie zur Durchführung eines Verfahrens geeignet ist, welches folgende Verfahrensschritte umfasst:
- Anschließen des Einspritzsystems (30) an eine Messkammer (42),
- Einbringen eines Prüffluids in eine Messkammer (42),
- anschließendes Erfassen des zeitlichen Verlaufs der Bewegung (sₘ(t)) eines die Messkammer (42) wenigstens bereichsweise begrenzenden Kolbens (34) von einer Erfassungseinrichtung (50) und
- Auswerten mindestens einer Zeitreihe der von der Erfassungseinrichtung (50) gelieferten Messsignale (sₘ (t)) durch Vergleich mit mindestens einer Referenzzeitreihe (s_{ref} (t)).

9. Vorrichtung nach Anspruch 7 oder 8, **dadurch gekennzeichnet, dass** sie eine Dämpfungseinrichtung (14, 66) umfasst, welche die Bewegung des Kolbens (34) wenigstens zeitweise dämpft.

10. Vorrichtung (10) nach Anspruch 9, **dadurch gekennzeichnet, dass** die Dämpfungseinrichtung (14, 66), insbesondere ihr Dämpfungsgrad und/oder der zeitliche Verlauf der Dämpfung, einstellbar ist.

11. Vorrichtung (10) nach einem der Ansprüche 7 bis 10, **dadurch gekennzeichnet, dass** sie eine Steuer- und Regeleinrichtung (84) umfasst und die Dämpfungseinrichtung (14) durch die Steuer- und Regeleinrichtung (84) ansteuerbar ist.

12. Vorrichtung (10) nach einem der Ansprüche 7 bis 11, **dadurch gekennzeichnet, dass** der Kolben (34) durch eine Schraubenfeder (36) gegen das Prüffluid vorgespannt ist.

13. Vorrichtung (10) nach einem der Ansprüche 7 bis 12, **dadurch gekennzeichnet, dass** der Kolben (34) auf seiner dem Prüffluid abgewandten Seite mit einem Gasdruck beaufschlagt wird.

14. Computerprogramm, **dadurch gekennzeichnet, dass** es zur Durchführung der Verfahren nach den Ansprüchen 1 bis 6 geeignet ist, wenn es auf einem Computer ausgeführt wird.

15. Computerprogramm nach Anspruch 14, **dadurch gekennzeichnet, dass** es auf einem Speicher, insbesondere auf einem Flash-Memory, abgespeichert ist.

## Claims

1. Method for measuring the leakage of injection systems (30), especially for internal combustion engines of motor vehicles and especially during in-process inspections, **characterized by** the following method steps:
- connecting the injection system (30) to a measuring chamber (42),
- introducing a test fluid into a measuring chamber (42),
- varying the pressure (pₜₑₛₜ) in the injection system (30),
- sensing the time characteristic of the movement (Sₘ(t)) of a piston (34) of a sensing device (50) the said piston (34) being at least partially adjacent to the measuring chamber (42) and
- evaluating a time series of the measurement signals (sₘ,i (t))supplied by the sensing device (50) for each pressure (p_{test,i}).

2. Method for measuring the leakage of injection systems (30), especially for internal combustion engines of motor vehicles and especially during in-process inspections, **characterized by** the following method steps:
- connecting the injection system (30) to a measuring chamber (42),
- introducing a test fluid into a measuring chamber (42),
- then sensing the time characteristic of the movement (sₘ(t)) of a piston (34) of a sensing device (50), the said piston (34) being at least partially adjacent to the measuring chamber (42),
- evaluating at least one time series of the measurement signals (Sₘ (t)) supplied by the sensing device (50) by comparison with at least one reference time series (S_{ref} (t)).

3. Method according to Claim 1 or 2, **characterized in that** the test fluid is introduced by the injection system (30) into the measuring chamber (42).

4. Method according to one of Claims 2 or 3, **characterized in that** the pressure (pₜₑₛₜ) in the injection system (30) is varied and for each pressure (p_{test,i}) at least one measurement signal (sₘᵢ) supplied by the sensing device (50) is evaluated.

5. Method according to one of the preceding claims, **characterized in that** the pressure (pₜₑₛₜ) in the injection system (30) is varied and a time series of the measurement signals (sₘᵢ (t) supplied by the sensing device (50) is evaluated for each pressure (p_{test,i}).

6. Method according to one of Claims 1 or 3 to 5, **characterized in that** the measurement signal(s) (sₘᵢ) is/are evaluated by comparison with one or more reference values (s_{ref}).

7. Device (10) for measuring the leakage of injection systems (30), especially for internal combustion engines of motor vehicles and especially during the in-process inspection, with a measuring chamber (42) into which a test fluid can be injected by the injection system (30), with a piston (34) that is at least partially adjacent to the measuring chamber (42), with the piston (34) being preloaded against the test fluid, and with a sensing device (50) that senses a movement of the piston and supplies a corresponding measurement signal (sm) or a time series (sₘ (t)) of measurement signals, **characterized in that** it is suitable for the performance of a method that includes the following steps of the method:
- connecting the injection system (30) to a measuring chamber (42),
- introducing a test fluid into a measuring chamber (42),
- varying the pressure (pₜₑₛₜ) in the injection system (30),
- sensing the time characteristic of the movement (sₘ (t)) of a piston (34) of a sensing device (50), the said piston (34) being at least partially adjacent to the measuring chamber (42),
- evaluating a time series of the measurement signals (s_{m,i} (t)) supplied by the sensing device (50) for each pressure (p_{test,i}).

8. Device (10) for measuring the leakage of injection systems (30), especially for internal combustion engines of motor vehicles and especially during the in-process inspection, with a measuring chamber (42) into which a test fluid can be injected by the injection system (30), with a piston (34) that is at least partially adjacent to the measuring chamber (42), with the piston (34) being preloaded against the test fluid, and with a sensing device (50) that senses a movement of the piston and supplies a corresponding measurement signal (sm) or a time series (sₘ (t)) of measurement signals, **characterized in that** it is suitable for performance of a method that includes the following steps of the method:
- connecting the injection system (30) to a measuring chamber (42),
- introducing a test fluid into a measuring chamber (42),
- then sensing the time characteristic of the movement (sₘ(t)) of a piston (34) of a sensing device (50), the said piston (34) being at least partially adjacent to the measuring chamber (42) and
- evaluating at least one time series of the measurement signals (sₘ (t)) supplied by the sensing device (50), by comparison with at least one reference time series (s_{ref} (t)).

9. Device according to Claim 7 or 8, **characterized in that** it includes a damping device (14, 66) that at least intermittently dampens the movement of the piston (34).

10. Device (10) according to Claim 9, **characterized in that** the damping device (14, 66), especially its degree of damping and/or the time characteristic of the damping, is adjustable.

11. Device (10) according to one of Claims 7 to 10, **characterized in that** it includes an open- or closed-loop control device (84) and the damping device (14) can be actuated by the open- or closed-loop control device (84).

12. Device (10) according to one of Claims 7 to 11, **characterized in that** the piston (34) is preloaded against the test fluid by a coil spring (36).

13. Device (10) according to one of Claims 7 to 12, **characterized in that** gas pressure is applied to the piston (34) at the end away from the test fluid.

14. Computer program, **characterized in that** it is suitable for performing the method according to Claims 1 to 6, if it is performed on a computer.

15. Computer program according to Claim 14, **characterized in that** it is stored in a memory, especially in a flash memory.

## Revendications

1. Procédé de mesure de la fuite de systèmes d'injection (30), en particulier pour des moteurs à combustion interne de véhicules automobiles et notamment pendant le contrôle de fabrication,
**caractérisé par**
les étapes de procédé suivantes :
- raccordement du système d'injection (30) à une chambre de mesure (42),
- introduction d'un fluide de contrôle dans une chambre de mesure (42),
- variation de la pression (p_{contrôle}) dans le système d'injection (30),
- enregistrement de l'évolution dans le temps du mouvement (sₘ(t)) d'un piston (34) délimitant la chambre de mesure (42) au moins partiellement par un dispositif d'enregistrement (50), et
- exploitation d'une série temporelle des signaux de mesure (sₘ, ᵢ(t)) fournis par le dispositif d'enregistrement (50) pour chaque pression (p_{contrôle,i}).

2. Procédé de mesure de la fuite de systèmes d'injection (30), en particulier pour des moteurs à combustion interne de véhicules automobiles et notamment pendant le contrôle de fabrication, **caractérisé par**
les étapes de procédé suivantes :
- raccordement du système d'injection (30) à une chambre de mesure (42),
- introduction d'un fluide de contrôle dans une chambre de mesure (42),
- enregistrement de l'évolution dans le temps du mouvement (sₘ(t)) d'un piston (34) délimitant la chambre de mesure (42) au moins partiellement par un dispositif d'enregistrement (50), et
- exploitation d'une série temporelle des signaux de mesure (s_{m, i}(t)) fournis par le dispositif d'enregistrement (50) par comparaison avec au moins une série temporelle de référence (s_{réf}(t)).

3. Procédé selon la revendication 1 ou 2,
**caractérisé en ce que**
le fluide de contrôle est injecté par le système d'injection (30) dans la chambre de mesure (42).

4. Procédé selon l'une quelconque des revendications 2 ou 3,
**caractérisé en ce que**
la pression (p_{contrôle}) varie dans le système d'injection (30) et pour chaque pression (p_{contrôle,i}) au moins un signal de mesure (sₘᵢ) fourni par le dispositif d'enregistrement (50) est exploité.

5. Procédé selon l'une des revendications précédentes, **caractérisé en ce que**
la pression (p_{contrôle}) varie dans le système d'injection (30) et pour chaque pression (p_{contrôle,i}) une série temporelle des signaux de mesure (sₘᵢ(t)) fournis par le dispositif d'enregistrement (50) est exploitée.

6. Procédé selon l'une quelconque des revendications 1 et 3 à 5,
**caractérisée en ce que**
l'exploitation du ou des signaux de mesure (sₘᵢ) s'effectue par comparaison avec une ou plusieurs valeurs de référence (s_{réf}).

7. Dispositif (10) de mesure de la fuite de systèmes d'injection (30), en particulier pour des moteurs à combustion interne de véhicules automobiles et notamment pendant le contrôle de fabrication, comprenant une chambre de mesure (42) dans laquelle un fluide de contrôle peut être injecté par le système d'injection (30), avec un piston (34) qui délimite au moins partiellement la chambre de mesure (42), le piston (34) étant précontraint par rapport au fluide de contrôle, et un dispositif d'enregistrement (50) enregistre un mouvement du piston puis fournit un signal de mesure (sm) correspondant ou une série temporelle (sₘ(t)) de signaux de mesure, **caractérisé en ce qu'**
il est approprié pour la mise en oeuvre d'un procédé comprenant les étapes suivantes :
- raccordement du système d'injection (30) à une chambre de mesure (42),
- introduction d'un fluide de contrôle dans une chambre de mesure (42),
- variation de la pression (p_{contrôle}) dans le système d'injection (30),
- enregistrement de l'évolution dans le temps du mouvement (sₘ(t)) d'un piston (34) délimitant la chambre de mesure (42) au moins partiellement par un dispositif d'enregistrement (50), et
- exploitation d'une série temporelle des signaux de mesure (sₘ, ᵢ(t)) fournis par le dispositif d'enregistrement (50) pour chaque pression (p_{contrôle,i}).

8. Dispositif (10) de mesure de la fuite de systèmes d'injection (30), en particulier pour des moteurs à combustion interne de véhicules automobiles et notamment pendant le contrôle de fabrication, comprenant une chambre de mesure (42) dans laquelle un fluide de contrôle peut être injecté par le système d'injection (30), avec un piston (34) qui délimite au moins partiellement la chambre de mesure (42), le piston (34) étant précontraint par rapport au fluide de contrôle, et un dispositif d'enregistrement (50) enregistre un mouvement du piston et fournit un signal de mesure (sm) correspondant ou une série temporelle (sₘ(t)) de signaux de mesure, **caractérisé en ce qu'**
il est approprié pour la mise en oeuvre d'un procédé comprenant les étapes suivantes :
- raccordement du système d'injection (30) à une chambre de mesure (42),
- introduction d'un fluide de contrôle dans une chambre de mesure (42),
- enregistrement de l'évolution dans le temps du mouvement (sₘ(t)) d'un piston (34) délimitant au moins partiellement la chambre de mesure (42) par un dispositif d'enregistrement (50), et
- exploitation d'une série temporelle de signaux de mesure (sₘ, ᵢ(t)) fournis par le dispositif d'enregistrement (50) par comparaison avec au moins une série temporelle de référence (s_{réf}(t)).

9. Dispositif selon la revendication 7 ou 8,
**caractérisé en ce qu'**
un dispositif d'amortissement (14, 66) amortit le mouvement du piston (34) au moins temporairement.

10. Dispositif (10) selon la revendication 9,
**caractérisé en ce que**
le dispositif d'amortissement (14, 66), en particulier son degré d'amortissement et/ou l'évolution dans le temps de l'amortissement, sont réglables.

11. Dispositif (10) selon l'une des revendications 7 à 10,
**caractérisé en ce qu'**
il comprend un dispositif de commande et de régulation (84) qui peut commander le dispositif d'amortissement (14).

12. Dispositif (10) selon l'une quelconque des revendications 7 à 11,
**caractérisé en ce que**
le piston (34) est précontraint par rapport au fluide de contrôle par un ressort hélicoïdal (36).

13. Dispositif (10) selon l'une quelconque des revendications 7 à 12,
**caractérisé en ce que**
le piston (34) est sollicité par une pression de gaz sur sa face détournée du fluide de contrôle.

14. Programme informatique,
**caractérisé en ce qu'**
il est approprié pour réaliser les procédés selon les revendications 1 à 6 s'il est exécuté sur un ordinateur.

15. Programme informatique selon la revendication 14,
**caractérisé en ce qu'**
il est stocké dans une mémoire, en particulier une mémoire flash.
